# EUROPEAN PATENT SPECIFICATION

(11) **EP 0 749 781 B1**
(45) Date of publication and mention of the grant of the patent: **29.08.2001**
(21) Application number: 96304592.7
(22) Date of filing: 20.06.1996
(51) Int. Cl.: B01J 29/04

(54) **Crystalline microporous oxide having increased lewis acidity and fluid catalytic cracking process using same**
Kristalline mikroporöse Oxide mit erhöhtem Säuregehalt und Verfahren zur katalytischen Wirbelschichtspaltung unter Verwendung derselben
Oxydes cristallins microporeux ayant une acidité accrue et procédé de craquage catalytique en lit fluidisé les utilisant

(30) Priority: 23.06.1995 US 493947; 23.06.1995 US 493948
(43) Date of publication of application: 27.12.1996
(73) Proprietor: ExxonMobil Research and Engineering Company, Annandale, New Jersey 08801 (US)
(72) Inventor: Schuette, William Lee, New Road, Louisiana 70760 (US); Schweizer, Albert Edward, Baton Rouge 70815 (US)
(74) Representative: Dew, Melvyn John

(56) References cited:
- EP-A- 0 286 029
- EP-A- 0 321 177
- WO-A-91/11412
- WO-A-93/02156

## Description

### FIELD OF THE INVENTION

This invention relates to a crystalline microporous oxide having increased Lewis acidity. More particularly, this invention relates to a crystalline microporous oxide to which a compound for promoting dehydrogenation and increasing Lewis acidity has been effectively added without increasing the unit cell size of the crystalline microporous oxide.

### BACKGROUND OF THE INVENTION

Crystalline microporous oxides have been in commercial use in a variety of industries for many years. These materials are especially valuable for their fluid separation ability as molecular sieves as well as for their ability to act as a catalyst.

Crystalline microporous oxides are particularly useful as catalysts which convert the large paraffin molecules of a hydrocarbon mixture into smaller more unsaturated molecules such as olefins and aromatics. To maximize this conversion process, many structural properties of the catalyst have to be balanced such as pore size, pore volume, Lewis acidity, and Brønsted acidity. If the structural properties of the conversion catalyst are not properly balanced, conversion of the hydrocarbon mixture to the desired product may be low, product quality may be poor, or the conversion catalyst may be rapidly deactivated.

It would be of particular benefit to obtain a crystalline microporous oxide catalyst high in catalytic activity by balancing the Brønsted acidity and the Lewis acidity of the framework and non-framework portions of the catalyst. By balancing the composition of the framework and non-framework portions of the crystalline structure, catalytic activity can be efficiently optimized. In the case of a cracking catalyst, olefin forming reactions of large paraffin molecules can be more efficiently coupled with the subsequent scission reactions which form the smaller molecules in the final product.

U.S. Patent Nos. 5,059,567 and 5,242,677 disclose a particular type of crystalline microporous oxide, a Y-type zeolite, which has been prepared by dealumination and aluminum ion exchange. Initially, a hydrogen Y zeolite is formed by ammonium exchanging and calcining a zeolite Y. The hydrogen Y zeolite is then ammonium exchanged and calcined, with the result being an ultrastable Y zeolite having a relatively small unit cell size. The effect on catalytic activity is not described, however.
Lutz et al., "Increased Hydrothermal Stability of Dealuminated Y Zeolites by Alumination", Zeolites, 13 685 (1993), disclose dealuminated Y zeolites which have been re-aluminated. Reportedly, the alumina from the re-alumination process does not enter the framework of the zeolite, and the process results in increased hydrothermal stability. The effect on catalytic activity is also not described.

Haag and Lago, in U.S. Patent No. 4,418,235, and Lago et al. in "New Developments in Zeolite Science and Technology" (1986) page 677, demonstrate a significant enhancement of zeolite catalyst activity by a mild steaming that they claim removes some of the framework aluminum and excretes "enhances activity" sites. Further steam treatment removes these "enhances activity" sites. The mild steaming shown on the ZSM-5 zeolites is significantly less severe than that which is used in catalysts for catalytic cracking.

In accordance with the present invention there is provided a catalyst comprising:
(i) a matrix material; and
(ii) a crystalline microporous oxide incorporated within said matrix material,
said crystalline microporous oxide comprising a non-framework portion and having a unit cell size, said non-framework portion comprising a promoter metal compound capable of increasing Lewis acidity incorporated therein without substantially increasing the unit cell size of the crystalline microporous oxide.

Also provided is a cracking catalyst comprised of an inorganic oxide matrix material, a crystalline microporous oxide, and a promoter metal compound for promoting dehydrogenation and increasing Lewis acidity. The promoter metal compound is effectively added so that the original unit cell size of the crystalline microporous oxide remains unchanged.

There is also provided a fluid catalytic cracking process for converting petroluem feedstocks to lower boiling products by contacting said feedstock with the above- mentioned catalyst.

In a preferred embodiment of the invention, the promoter metal compound is an effective metal cation which is effectively added with substantially no increase in unit cell size of the crystalline microporous oxide. The promoter metal compound is preferably a volatile multivalent metal compound.

In another preferred embodiment of the present invention, the promoter metal compound for promoting dehydrogenation and increasing Lewis acidity is a volatile aluminum compound sorbed on the crystalline microporous oxide. Preferably, the vaporizable aluminum compound sorbed on the crystalline microporous oxide is a vapor deposited aluminum compound. More preferably, the promoter metal compound may be generated by heat decomposition of aluminum acetylacetonate or aluminum isopropoxide which has been sorbed on the crystalline microporous oxide.

In yet another preferred embodiment of the invention, the crystalline microporous oxide is a crystalline zeolite.

It has been found that the catalytic activity of a crystalline microporous oxide, such as a zeolitic material, can be improved by effectively adding a promoter metal compound which is effective in promoting dehydrogenation and which increases Lewis acidity of the microporous oxide without increasing its unit cell size. The crystalline microporous oxide can be used as a catalyst or the crystalline microporous oxide can be incorporated into a matrix material and used as a catalyst, e.g., a hydrocarbon cracking catalyst. Other catalytic or non-catalytic components can also be present in the matrix.

The crystalline microporous oxide of this invention is one that is characterized as having unit cells and which can be used to catalyze the breakdown of primary products from the catalytic cracking reaction into clean products such as naphtha for fuels and olefins for chemical feedstocks. Preferably, the crystalline microporous oxide is selected from the group consisting of crystalline aluminosilicate zeolites (hereafter zeolites), tectosilicates, tetrahedral aluminophophates (ALPOs) and tetrahedral silicoaluminophosphates (SAPOs). More preferably, the crystalline microporous oxide is a zeolite.

Zeolites which can be employed in accordance with this invention include both natural and synthetic zeolites. These zeolites include gmelinite, chabazite, dachiardite, clinoptilolite, faujasite, heulandite, levynite, erionite, cancrinite, scolecite, offretite, mordenite, and ferrierite. Included among the synthetic zeolites are zeolites X, Y, L, ZK-4, ZK-5, E, H, J, M, Q, T, Z, alpha and beta, ZSM-types and omega. Preferred are the faujasites, particularly zeolite Y and zeolite X, more preferably those having a unit cell size greater than or equal to 24.30Å, most preferably 24.40Å. The aluminum in the zeolite, as well as the silicon component can be substituted for other framework components. For example, the aluminum portion can be replaced by boron, gallium, titanium or trivalent metal compositions which are heavier than aluminum. Germanium can be used to replace the silicon portion.

When used as a cracking catalyst, the crystalline microporous oxide of this invention will be included within an inorganic oxide matrix material that binds the catalyst components together so that the final catalyst is hard enough to survive interparticle and reactor wall collisions. An inorganic oxide matrix material can be made from an inorganic oxide sol or gel which is dried to "glue" the catalyst components together. Preferably, the inorganic oxide matrix material which can be incorporated into the cracking catalyst of this invention comprises oxides of silicon and aluminum. The inorganic oxide matrix material can further comprise an active porous inorganic oxide catalyst component and an inert catalyst component. Preferably, each component of the catalyst is held together by attachment with the inorganic oxide matrix material.

An active porous inorganic oxide catalyst component typically catalyzes the formation of primary products by cracking hydrocarbon molecules that are too large to fit inside the crystalline microporous oxide. An active porous inorganic oxide catalyst component which can be incorporated into the cracking catalyst of this invention is preferably a porous inorganic oxide that cracks a relatively large amount of hydrocarbons into lower molecular weight hydrocarbons as compared to an acceptable thermal blank. A low surface area silica (e.g., quartz) is one type of acceptable thermal blank. The extent of cracking can be measured in any of various ASTM tests such as the MAT (microactivity test, ASTM # D3907-8). Compounds such as those disclosed in Greensfelder, B. S., et al., Industrial and Engineering Chemistry, pp. 2573-83, Nov. 1949, are desirable. Alumina, silica-alumina and silica-alumina-zirconia compounds are preferred.

An inert component of the catalyst typically densifies, strengthens and acts as a protective thermal sink. An inert catalyst component which can be incorporated into the cracking catalyst of this invention preferably has a cracking activity that is not significantly greater than the acceptable thermal blank. Kaolin and other clays as well as α-alumina, titania, zirconia, quartz and silica are examples of preferred inert components.

It is also preferred that separate discrete alumina phases be incorporated into the inorganic oxide matrix. Species of aluminum oxyhydroxides-γ-alumina, boehmite, diaspore, and transitional aluminas such as α-alumina, β-alumina, γ-alumina, δ-alumina, ε-alumina, κ-alumina, and ρ-alumina can be employed. Preferably, the alumina species is an aluminum trihydroxide such as gibbsite, bayerite, nordstrandite, or doyelite.

The crystalline microporous oxide of this invention includes a promoter metal compound for promoting dehydrogenation and increasing Lewis acidity, without any appreciable increase in unit cell size. That is, wherein the unit cell size of the crystalline microporous oxide material, after incorporation of the promoter metal compound, is substantially the same as the orginal starting material. Preferably, the promoter metal compound is in a chemical state to effectively promote the dehydrogenation of paraffinic and naphthenic compounds in a hydrocarbon feed stream to form olefinic compounds. The hydrocarbon feed stream is preferably a petroleum hydrocarbon fraction which preferably has an initial boiling point of at least about 204°C (400°F), more preferably at least about 315°C (600°F). As appreciated by those of ordinary skill in the art, such hydrocarbon fractions are difficult to precisely define by initial boiling point since there are so many different types of compounds present in a petroleum hydrocarbon fraction. Hydrocarbon fractions which are included in this range, however, are understood to include gas oils, thermal oils, residual oils, cycle stocks, topped and whole crudes, tar sand oils, shale oils, synthetic fuels, heavy hydrocarbon fractions derived from coking processes, tar, pitches, asphalts, and hydrotreated feed stocks derived from any of the foregoing.

The promoter metal compound for promoting dehydrogenation and increasing Lewis acidity is a compound which sorbs on the crystalline microporous oxide portion of the catalyst in such a manner as to promote the dehydrogenation of paraffins and naphthenes. Preferably, large paraffins are converted to olefins as a result of the paraffins having contacted the crystalline microporous oxide. The olefins are then preferably converted into smaller paraffin molecules, olefinic molecules, and aromatic molecules in ratios desired for fuels products.

According to yet another embodiment, the present invention is a process comprising:
(a) contacting a crystalline microporous oxide and a promoter precursor comprising a promoter metal capable of forming a promoter metal compound, said crystalline microporous oxide comprising a non-framework portion and having a unit cell size; and,
(b) heat activating the mixture of step (a) to incorporate the promoter metal compound into the non-framework portion of the crystalline microporous oxide without substantially increasing the unit cell size of the crystalline microporous oxide.

According to this invention, the crystalline microporous oxide includes a framework portion and a non-framework portion. Lewis acidity of the crystalline microporous oxide is increased by increasing the number of effective metal cation sites of the non-framework portion of the crystalline microporous oxide without increasing the unit cell size. Typically, when a compound is incorporated into the framework portion of the crystalline microporous oxide, the unit cell size thereof will be increased. However, when the promoter materials of the present invention are incorporated into the crystalline micorporous oxide material of the present invention, the unit cell size remains substantially the same. Cf., W.O. Haag, "Catalysis by Zeolites - Science and Technology", Zeolites and Related Microporous Materials, edited by J. Weitkamp, H.G. Karge, H. Pfeifer, and W. Holderich, Vol. 84, Elsevier Science B. V., 1994, PP 1375 - 1394, which discusses the relevance of Lewis acid sites. As used herein, metal cation refers to either a metal ion or the metal ion plus oxide ion species.

In order to increase the effective number of metal cation non-framework acid sites, a promoter precursor capable of giving rise to the promoter metal compound for promoting dehydrogenation and increasing Lewis acidity is sorbed on the crystalline microporous oxide by a liquid or gas phase reaction. For example, the promoter precursor can be sorbed to the crystalline microporous oxide by vapor phase transfer.

It is not necessary that the promoter metal compounds which are effective in promoting dehydrogenation and increasing Lewis acidity of the crystalline microporous oxide of this invention be active before sorption takes place. In fact, it is preferred in this invention that the zeolite containing the promoter precursor is activated after sorption. Activation can be accomplished by decomposing the sorbed promoter precursor, for example, by using heat treatment.

Preferably, the promoter metal compound for promoting dehydrogenation and increasing Lewis acidity of this invention is a compound that is stable in the gas phase. It is also desirable that the promoter precursors have a boiling point of less than 500°C.

In a preferred embodiment of this invention, the promoter precursor added to the crystalline microporous oxide for promoting dehydrogenation and increasing Lewis acidity is a volatile compound of a multivalent metal . Preferably, the volatile promoter precursor is a multivalent metal compound containing a di-valent or tri-valent metal. Preferred as a di-valent or tri-valent metal is a metal selected from the group consisting of magnesium, chromium, iron, lanthanum, and aluminum. Examples of preferred promoter precursors include aluminum acetylacetonate, aluminum isopropyloxide, aluminum hexafluoroacetylacetonate, aluminum dichlorohydrol, aluminum ethoxides, tris[2,2,6,6-tetramethyl-3-5, heptanedianoto]aluminum-III[Al(TMHD)3], trimethyl aluminum, triethyl alumnium, triisobutyl aluminum, aluminum acetate, aluminum nitrate, aluminum propoxide, magnesium acetylacetonate, chromium acetylacetonate, iron acetylacetonate, and lanthide acetylacetonate.

The finished crystalline microporous oxide of this invention can be added to an inorganic oxide matrix material as described above to form a cracking catalyst. The matrix material may constitute the balance of a composition comprising the cracking catalyst composition, although other catalyst components and materials can be incorporated into the catalyst. It is preferable that the matrix material be present in the cracking catalyst in an amount ranging from about 40-99 wt%, more preferably from about 50 to about 80 wt% based on the total catalyst weight. It is also within the scope of the invention to incorporate into the cracking catalyst other types of microporous oxides, clays, and carbon monoxide oxidation promoters.

The catalysts of the present invention can be used in various petroleum and chemical processes, particularly those in which dehydrogenation of paraffins is desired. For example, they can be used to catalyze reactions in fluid catalytic cracking, hydrocracking, and isomerization. Catalytic cracking is an established and widely used process in the petroleum refining industry for converting petroleum oils of relatively high boiling point fractions to more valuable lower boiling products. As appreciated by those of ordinary skill in the art, such hydrocarbon fractions are difficult to precisely define by initial boiling point since there are so many different types of compounds present in a petroleum hydrocarbon fraction. Hydrocarbon fractions which are included in this range, however, are understood to include gas oils, thermal oils, residual oils, cycle stocks, topped and whole crudes, tar sand oils, shale oils, synthetic fuels, heavy hydrocarbon fractions derived from coking processes, tar, pitches, asphalts, and hydrotreated feed stocks derived from any of the foregoing.

Fluid catalytic cracking is an established and widely used process in the petroleum refining industry for converting petroleum oils of relatively high boiling point to more valuable lower boiling products, including gasoline and middle distillates, such as kerosene, jet fuel and heating oil. Typical feeds to a catalytic cracker can generally be characterized as being a relatively high boiling oil or residuum, either on its own, or mixed with other fractions, also usually of a relatively high boiling point. The most common feeds are gas oils, that is, high boiling, non-residual oils, with an initial boiling point usually above about 230°C, more commonly above about 350°C, with end points of up to about 620°C. Typical gas oils include straight run (atmospheric) gas oil, vacuum gas oil, and coker gas oils.

Fluid catalytic cracking units will typically contain a reactor where the hydrocarbonaceous feedstock is brought into contact with hot powdered catalyst particles which were heated in a regenerator. Transfer lines connect the two vessels for moving catalyst particles back and forth. The cracking reaction will preferably be carried out at a temperature from 450° to 680°C, more preferably from 480° to 560°C; pressures from 135.5 kPa to 515 kPa (5 to 60 psig), more preferably from 135.5 kPa to 377 kPa (5 to 40 psig); contact times (catalyst in contact with feed) of 0.5 to 15 seconds, more preferably 1 to 6 seconds; and a catalyst to oil ratio of 0.5 to 10, more preferably from 2 to 8. During the cracking reaction, lower boiling products are formed and some hydrocarbonaceous material, and non-volatile coke are deposited on the catalyst particles. The hydrocarbonaceous material is removed by stripping, preferably with steam. The non-volatile coke is typically comprised of highly condensed aromatic hydrocarbons which generally contain 4 to 10 wt.% hydrogen. As hydrocarbonaceous material and coke build up on the catalyst, the activity of the catalyst for cracking, and the selectivity of the catalyst for producing gasoline blending stock, is diminished. The catalyst particles can recover a major proportion of their original capabilities by removal of most of the hydrocarbonaceous material by stripping and the coke by a suitable oxidative regeneration process. Consequently, the catalyst particles are sent to a stripper and then to a regenerator.

Catalyst regeneration is accomplished by burning the coke deposits from the catalyst surface with an oxygen-containing gas such as air. Catalyst temperatures during regeneration may range from 560°C to 760°C. The regenerated, hot catalyst particles are then transferred back to the reactor via a transfer line and, because of their heat, are able to maintain the reactor at the temperature necessary for the cracking reactions. Coke burn-off is an exothermic reaction, therefore in a conventional fluid catalytic cracking unit with conventional feeds, no additional fuel needs to be added. The feedstocks used in the practice of the present invention, primarily because of their low levels of aromatics, and also due to the relatively short contact times in the reactor or transfer line, may not deposit enough coke on the catalyst particles to achieve the necessary temperatures in the regenerator. Therefore, it may be necessary to use an additional fuel to provide increased temperatures in the regenerator so the catalyst particles returning to the reactor are hot enough to maintain the cracking reactions. Non-limiting examples of suitable additional fuel include C₂- gases from the catalytic cracking process itself; natural gas; and torch oil. Preferred are the C₂- gases.

Isomerization is another process in which the catalysts of the present invention can be used. Hydrocarbons which may be isomerized by the process of the present invention include paraffinic and olefinic hydrocarbons typically having 4-20, preferably 4-12, more preferably about 4-6 carbon atoms; and aromatics such as xylene. The preferred chargestock is comprised of paraffinic hydrocarbons typified by butanes, pentanes, hexanes, heptanes, etc. Isomerization conditions include temperatures from 80°C to 350°C, preferably from 100°C to 260°C; a pressure from 0 to 7000 kPa (0 to 1,000 psig), peferably from 0 to 2170 kPa (0 to 300 psig); a liquid hourly space velocity of 0.1 to 20, preferably 0.1 to 2; and a hydrogen rate of 177.9 m³/m³ to 890 m³/m³ (in standard cubic feet per barrel of 1,000 to 5,000), preferably from 267 m³/m^{3 to} 445 m³/m³ (1,500 to 2,500 scf/barrel). Operating temperatures and catalyst activity are correlated with space velocity to give reasonably rapid processing of the feedstock at catalyst deactivation rates which insure maximum on-stream time of the catalyst between periods of regeneration.

The catalysts of the present invention may also be used in hydrocracking processing. Hydrocracking increases the overall refinery yield of quality gasoline-blending components. Hydrocracking can take a relatively low-quality gas oil feed that otherwise would be blended into distillate fuel and converts it, in the presence of hydrogen and an appropriate catalyst in fixed-bed reactors. Typically, the feedstock is mixed with hydrogen vapor, heated to 140°C to 400°C, pressurized to 8280 kPa to 24150 kPa (1,200 to 3,500 psi), and charged to a first-stage reactor where 40 to 50% of the feedstock reacts to remove nitrogen and sulfur compounds that inhibit the cracking reactions and make lower quality products. The stream from the first stage is cooled, liquefied, and run through a separator where butanes and lighter gases are taken off. The bottoms fraction is passed to a secondstage reactor a cracked at higher temperatures and pressures wherein additional gasoline-blending components and a hydrocrackate are produced.

The invention will be further understood by reference to the following Examples, which include preferred embodiments of the invention.

### EXAMPLE 1 (Comparative, not according to the invention)

Standard MAT tests (e.g., microactivity test, ASTM # D3907-8) were runon three .separate commercially available crystalline microporous oxides: USY (obtained from W.R. Grace, Davison Division, as Z14USY or UOP as LZY 82 or LZY 84); LZ-210 (available from Katalystiks, Inc.); and calcined rare earth exchanged Y (CREY, available from W.R. Grace, Davison Division). Prior to running the MAT test, the crystalline microporous oxides were combined with matrix material (Ludox, available from DuPont) and steamed at 1400°F for 16 hours to produce a cracking catalyst. Each catalyst tested comprised 20 wt% zeolite and 80 wt% matrix material. The results are indicated in Table 1 below.

**Table 1**

| | **USY** | **LZ-210** | **CREY** |
|---|---|---|---|
| MAT Results | | | |
| conversion | | | |
| (wt%, -236°C (400°F minus)) | 42.5 | 47.7 | 64.1 |
| H₂ (wt%) | 0.0113 | 0.0186 | 0.0064 |
| C (wt%) | 1.480 | 1.891 | 1.760 |
| Surface Area (m²/g) | 200 | 189 | 130 |
| Pore Volume (cm³/g) | 0.439 | 0.023 | 0.254 |
| Unit Cell (Å) | 24.21 | 24.24 | 24.51 |

### EXAMPLE 2 (Comparative, not according to the invention)

The crystalline microporous oxides of EXAMPLE 1 were metal ion exchanged according to the method of cation exchange in zeolites as described in A. Dyer, An Introduction to Zeolite Molecular Sieves, Chapter 6, "Zeolites as Ion Exchangers", John Wiley & Sons, 1988. The metal ion exchange was performed using a strongly acidic solution containing aluminum ions to provide an artificial source of detrital alumina in the zeolite in addition to any detrital alumina already present. Detrital alumina in zeolites is alumina which does not form part of the zeolite framework. The ion-exchange procedure employed is believed to have resulted in a balanced increase in aluminum in non-framework (detrital) sites and possibly an increase in the 56 framework aluminum sites. After the crystalline microporous oxides were ion exchanged, they were combined with matrix material (Ludox, believed to be a form of silica) and steamed as in EXAMPLE 1, and run according to a standard MAT test. The results are shown in Table 2.

**Table 2**

| | **USY + Al**_{**2**}**O**_{**3**} | **LZ-210 + Al**_{**2**}**O**_{**3**} | **CREY + Al**_{**2**}**O**_{**3**} |
|---|---|---|---|
| MAT Results | | | |
| conversion | | | |
| (wt%, -236°C (400°F minus)) | 29.8 | 38.5 | 51.1 |
| H2 (wt%) | 0.0047 | 0.0055 | 0.0056 |
| C (wt%) | 1.119 | 1.737 | 1.516 |
| Surface Area (m²/g) | 194 | 172 | 161 |
| Pore Volume (cm³/g) | 0.346 | 0.314 | 0.318 |
| Unit Cell (Å) | 24.25 | 24.22 | 24.36 |

The results indicate that the metal ion exchanged crystalline microporous oxides have a significant reduction in conversion to product compared to the non-exchanged crystalline microporous oxides of EXAMPLE 1. This indicates that the metal ion exchange procedure results in the loss of effective metal cation sites of the non-framework portion of the crystalline microporous oxides in that the balance between Bronsted sites and Lewis sites is not favorable for the desired activity. The use of a metal ion-exchange procedure reduces desirable catalyst activity. It will be shown that a different technique for adding alumina, according to the invention, increases the Lewis acidity and thereby improves catalytic activity. The significant feature is the increase in Lewis acidity without increasing unit cell size.

### EXAMPLE 3 (Comparative, not according to the invention)

Standard MAT tests were run on three separate commercially available crystalline microporous oxides: rare earth exchanged CREY (RECREY) made by exchanging a portion of the CREY of Example 1 with a rare earth ion solution by the method of Dyer; hydrogen calcined rare earth exchanged Y (HCREY) made by exchanging the approximately 4 wt% Na⁺ of the CREY with NH₄⁺ according to the method of Dyer; and ultrastabilized calcined exchanged rare earth Y (USCREY) made by calcining NH4CREY according to the method described in references 6-13 of R. Szostak, "Modified Zeolites" (Chapter 5), Introduction to Zeolite Science and Practice, Vol. 58, Ed. by H. Van Bekkum, E.M.Flanigan, and J.C. Jansen, Elsevier, 1991. Prior to running the MAT test, the zeolites were combined with matrix material (10 wt% zeolite; 30 wt% SiO₂ as IMSIL-A-8, available from Unimin Specialty Minerals, Inc.; 60 wt% SiO₂-Al₂O₃ made from a gel obtained from W.R. Grace, Davison Division, which gives a 25 wt% Al₂O₃, SiO₂-Al₂O₃ when dried and washed) to produce a cracking catalyst. The results are indicated in Table 3.

**Table 3**

| | **RECREY** | **HCREY** | **USCREY** |
|---|---|---|---|
| MAT Results | | | |
| conversion | | | |
| (wt%, 430°F minus) | 45.3 | 50.1 | 44.0 |
| C (wt%) | 1.34 | 1.39 | 1.33 |
| 650°F+ prod. (wt%) | 32.4 | 27.4 | 32.7 |
| Surface Area (m²/g) | 101 | 129 | 113 |
| Unit Cell (Å) | 24.49 | 24.45 | |

### EXAMPLE 4 (According to the invention)

Each of the crystalline microporous oxides of EXAMPLE 3 was blended in a separate container with aluminum acetylacetonate (ratio of zeolite to aluminum acetylacetonate approximately 1:1.4; decomposition temperature of aluminum acetylacetonate slightly greater than 320°C). Each container was placed in an oven and heated to 150°C, held for one hour, and the oven was purged with an amount of nitrogen sufficient to flush out the potentially flammable decomposition products of the acetylacetone decomposition. After purging, the oven was heated to 500°C, held for one hour, and allowed to cool. The oven was then heated in air for 2 hours at 500°C. Based on the weight of the product, it was calculated that about 45 wt% of the alumina expected from the amount of aluminum acetylacetonate remained with the zeolite as a result of the addition process. The zeolite containing the added alumina was then made into catalyst as in Example 3 and then run under standard MAT conditions. The results are shown in Table 4.

**Table 4**

| | **RECREY + Al**_{**2**}**O**_{**3**} | **HCREY + Al**_{**2**}**O**_{**3**} | **USCREY + Al**_{**2**}**O**_{**3**} |
|---|---|---|---|
| MAT Results | | | |
| conversion | | | |
| (wt%, 430°F minus) | 55.2 | 58.2 | 60.8 |
| C (wt%) | 1.63 | 1.57 | 1.65 |
| 650°F+ prod. (wt%) | 22.6 | 19.3 | 17.4 |
| Surface Area (m²/g) | 118 | 81 | 143 |
| Unit Cell (Å) | - | 24.43 | 24.46 |
| | | | |
| | | | |

The results indicate that the crystalline microporous oxides which contain the added metal compound for promoting dehydrogenation and increasing Lewis acidity show a significant increase in conversion to gasoline product compared to the non-metal added crystalline microporous oxides of EXAMPLE 3. This indicates that the addition of the metal compound increased the number of effective metal cation sites of the non-framework portion of the crystalline microporous oxide. In other words, addition of the metal compound resulted in a significant increase in Lewis acid sites. This is also shown in Table 5 below by direct determination of the number of acidic sites per gram of catalyst.

If after steaming as in Example 3 hereof, pyridine is adsorbed onto the catalysts, then heated to 250°C under vacuum to desorb any pyridine from the more weakly acidic at non-acidic sites, infrared spectroscopy can be used to measure the relative amounts of pyridine adsorbed as the pyrindinium ion onto Bronsted acidic sites, and the amount sorbed as coordinated pyridine on the strong Lewis sites. When this is done on the catalysts as desorbed, the band intensities of the adsorbed pyridine on the three catalysts were observed, as indicated below with reference to Tables 5 and 6.

In Table 5 there are three different materials: 1) RECREY, a rare-earth exchanged zeolite of the FAU structure type. This is the starting material for the next two samples of this table. 2) RECREY + added alumina - (Sample I), is a sample of the RECREY to which alumina has been effectively added by the methods taught herein, as effective added alumina providing additional Lewis acid. The alumina was added by vapor-phase deposition from aluminium acetylacetonate. 3) RECREY + added alumina - (Sample II), is a sample of the RECREY to which alumina has been added in a way that is not effective as additional Lewis acid.

The methods taught by R.J. Gorte, et al, [Journal of Catalysis 148, 213-223 (1994), and referenced herein] and G.L. Price, et al. [Journal of Catalysis 148, 228-236, (1994)] are used to quantitatively determine the total acidity, characterized as both the amount of strongly acid sites (strong enough to effect n-propylamine to decompose to propylene and ammonia upon thermal desorption) and weakly acid sites (acidic because it will interact with n-propylamine at 50°C to retain the amine, but will desorb the n-propylamine as the temperature is raised). This determination measures both the Bronsted and Lewis acid sites. The measure of acidity is expressed as milli-equivalents of acid per gram of material (each millimole of amine is counted as reacting with one millimole of acid sites).

**Table 5**

| | **RECREY** | **RECREY + Added Al**_{**2**}**O**_{**3**} | **RECREY + Added Al**_{**2**}**O**_{**3**} |
|---|---|---|---|
| | | (SAMPLE I) | (SAMPLE II) |
| Total Al₂O₃ (wt.%) | 19.7 | 30.5 | 27.0 |
| Strong Acidity, MEQV/G | 0.46 | 0.38 | 0.40 |
| Weak Acidity, MEQV/G | 2.64 | 2.99 | 2.59 |
| Total Acidity, MEQV/G | 3.10 | 3.37 | 2.99 |
| Intensity of Bronsted Band | 22 units | 33 units | 33 units |
| Intensity of Lewis Band | 55 units | 104 units | 60 units |

Table 5 shows that only in the case of the effectively added alumina (I) is the weak acidity increased, along with the total acidity. The other example (II) shows that simply increasing the amount of alumina does not necessarily increase the acidity.

Each of the zeolite samples described above are used to prepare catalysts as described in Example 3, and then these composite catalysts are steamed to deactivate them at the same conditions described in Example 3.

A portion of each catalyst sample was then pressed into a thin disk. Each disk was weighed and its diameter and thickness measured. Each disk was then placed in a vacuum chamber and heated to remove any water or other sorbed gases. It was then cooled to 50°C and exposed to pyridine vapor for a short period. The sample was then held in vacuum for several hours and its' infrared spectrum obtained, particularly between 1400cm-1 and 1600cm-1. The sample was then heated to 250°C and held for several hours, and the spectrum was again obtained. This increased temperature and high vacuum removed any pyridine that was physically sorbed.

The infrared spectrum between 1400cm⁻¹ and 1600cm⁻¹ was measured on the material before the pyridine sorption and the spectrum was subtracted from the spectrum of the sample containing the pyridine. The resulting spectrum was that due to the pyridine interacting with the acidic sites of the catalyst.

In this spectral region , peaks at 1540cm⁻¹ to 1550cm⁻¹ were assigned to the pyridine that is coordinated to the protons from Bronsted acid sites. Peaks between 1440cm⁻ ¹ to 1460cm⁻¹ were assigned to pyridine with which the pair of electrons on the nitrogen were interacting with the electron accepting sites (Lewis Acids) of the solid. In this spectral region 1440cm⁻¹ to 1660cm⁻¹ other bands between 1480cm⁻¹ and 1500cm⁻¹ are due to combinations of bands of pyridine sorbed on both Bronsted and Lewis sites.

For the steamed, composite catalysts made with the zeolites shown in Table 5, Table 6 lists the intensities observed for the bands due to the presence of Bronsted and Lewis sites on the catalysts.

**Table 6**

| | **RECREY** | **RECREY + ADA*** | **RECREY + ADA*** |
|---|---|---|---|
| | | **I** | **II** |
| Band intensities due to: (abs. units/gram) | | | |
| Bronsted sites | 22 | 33 | 33 |
| Lewis Acid sites | 55 | 104 | 60 |

| | | | |
|---|---|---|---|
| * ADA signifies added detrital alumina | | | |

These results show the effective addition of this metal compound does increase the Lewis acidity of the active catalyst.

Having now fully described this invention, it will be appreciated by those skilled in the art that the invention can be performed within a wide range of parameters within what is claimed.

## Claims

1. A catalyst comprising:
(i) a matrix material; and
(ii) a crystalline microporous oxide incorporated within said matrix material,
said crystalline microporous oxide comprising a non-framework portion and having a unit cell size, said non-framework portion comprising a promoter metal compound capable of increasing Lewis acidity incorporated therein without substantially increasing the unit cell size of the crystalline microporous oxide.

2. The catalyst according to Claim 1 wherein the promoter metal compound is an aluminum compound.

3. The catalyst according to Claim 1 or 2 wherein the crystalline microporous oxide is a zeolite.

4. The catalyst according to any one of the preceding claims wherein the crystalline microporous oxide is X or Y zeolite.

5. The catalyst according to Claim 4 wherein the crystalline microporous oxide is Y zeolite having a unit cell size equal or greater than 24.30 Å.

6. The catalyst according to Claim 4 wherein the crystalline microporous oxide is Y zeolite having a unit cell size equal or greater than 24.40 Å.

7. The catalyst according to any one of the preceding Claims I to 3 wherein said crystalline microporous oxide is selected from the group consisting of zeolites, tectosilicates, tetrahedral aluminophosphates, and tetrahedral silicoaluminophosphates.

8. The catalyst according to any one of the preceding Claims wherein said crystalline microporous oxide is a zeolite and wherein said promoter metal compound is aluminum oxide.

9. The catalyst according to any one of the preceding Claims 1 to 7 wherein said promoter metal compound is a metal oxide wherein the metal of said metal oxide selected from the group consisting of magnesium, chromium, iron, lanthanum, and aluminum.

10. The catalyst according to any one of the preceding Claims wherein said promoter metal compound is a heat decomposed promoter precursor selected from the group consisting of aluminum acetylacetonate, aluminum isopropyloxide, aluminum hexafluoroacetylacetonate, aluminum dichlorohydrol, aluminum ethoxides, tris[2,2,6,6-tetramethyl-3-5, heptanedianoto]aluminum-III[Al(TMHD)₃], trimethyl aluminum, triethyl aluminum, triisobutyl aluminum, aluminum acetate, aluminum nitrate, aluminum propoxide, magnesium acetylacetonate, chromium acetylacetonate, iron acetylacetonate, and lanthanide acetylacetonate.

11. A process comprising:
(a) contacting a crystalline microporous oxide and a promoter precursor comprising a promoter metal capable of forming a promoter metal compound, said crystalline microporous oxide comprising a non-framework portion and having a unit cell size; and,
(b) heat activating the mixture of step (a) to incorporate the promoter metal compound into the non-framework portion of the crystalline microporous oxide without substantially increasing the unit cell size of the crystalline microporous oxide.

12. The process according to Claim 11 further comprising incorporating the product of step (b) into a matrix material.

13. The process according to Claim 11 wherein said crystalline microporous oxide is selected from the group consisting of zeolites, tectosilicates, tetrahedral aluminophosphates, and tetrahedral silicoaluminophosphates.

14. The process according to Claim 11 wherein said crystalline microporous oxide is a zeolite and wherein said promoter metal is aluminum.

15. The process according to Claim 11 wherein said promoter metal is selected from the group consisting of magnesium, chromium, iron, lanthanum, and aluminum.

16. The process according to claim 11 wherein said promoter precursor is selected from the group consisting of aluminum acetylacetonate, aluminum isopropyloxide, aluminum hexafluoroacetylacetonate, aluminum dichlorohydrol, aluminum ethoxides, tris[2,2,6,6-tetramethyl-3-5, heptanedianoto]aluminum-III[Al(TMHD)₃], trimethyl aluminum, triethyl aluminum, triisobutyl aluminum, aluminum acetate, aluminum nitrate, aluminum propoxide, magnesium acetylacetonate, chromium acetylacetonate, iron acetylacetonate, and lanthanide acetylacetonate.

17. The process according to claim 15 wherein said promoter precursor is aluminum acetylacetonate.

18. A fluid catalytic cracking process comprising: contacting a feedstock at fluid catalytic cracking conditions with a catalyst comprising:
(i) a matrix material;
(ii) a crystalline microporous oxide incorporated into with said matrix material,
said crystalline microporous oxide comprising a non-framework portion and having a unit cell size, said non-framework portion comprising a promoter metal compound capable of increasing Lewis acidity incorporated therein without substantially increasing the unit cell size of the crystalline microporous oxide as claimed in any one of the preceding Claims 1-10 or prepared by a process according to any one of the preceding Claims 11-17.

## Patentansprüche

1. Katalysator, der
(i) ein Matrixmaterial und
(ii) ein in das Matrixmaterial eingearbeitetes kristallines mikroporöses Oxid enthält,
wobei das kristalline mikroporöse Oxid einen nicht-gitterartigen Anteil und eine Elementarzellengröße aufweist, der nicht-gitterartige Anteil eine darin eingearbeitete Promotor-Metallverbindung enthält, die in der Lage ist, die Lewis-Acidität anzuheben, ohne die Elementarzellengröße des kristallinen mikroporösen Oxids wesentlich anzuheben.

2. Katalysator nach Anspruch 1, bei dem die Promotor-Metallverbindung eine Aluminiumverbindung ist.

3. Katalysator nach Anspruch 1 oder 2, bei dem das kristalline mikroporöse Oxid ein Zeolith ist.

4. Katalysator nach einem der vorangehenden Ansprüche, bei dem das kristalline mikroporöse Oxid X- oder Y-Zeolith ist.

5. Katalysator nach Anspruch 4, bei dem das kristalline mikroporöse Oxid Y-Zeolith mit einer Elementarzellengröße größer oder gleich 24,30 Å ist.

6. Katalysator nach Anspruch 4, bei dem das kristalline mikroporöse Oxid Y-Zeolith mit einer Elementarzellengröße größer oder gleich 24,40 Å ist.

7. Katalysator nach einem der vorangehenden Ansprüche 1 bis 3, bei dem das kristalline mikroporöse Oxid aus der Gruppe ausgewählt ist, die aus Zeolithen, Tectosilikaten, tetraedrischen Alumophosphaten und tetraedrischen Silicoalumophosphaten besteht.

8. Katalysator nach einem der vorangehenden Ansprüche, bei dem das kristalline mikroporöse Oxid ein Zeolith ist und die Promotor-Metallverbindung Aluminiumoxid ist.

9. Katalysator nach einem der vorangehenden Ansprüche 1 bis 7, bei dem die Promotor-Metallverbindung ein Metalloxid ist, bei dem das Metall des Metalloxides aus der Gruppe bestehend aus Magnesium, Chrom, Eisen, Lanthan und Aluminium ausgewählt ist.

10. Katalysator nach einem der vorangehenden Ansprüche, bei dem die Promotor-Metallverbindung ein wärmezersetzter Promotorvorläufer ist, der aus der Gruppe ausgewählt ist, die aus Aluminiumacetylacetonat, Aluminiumisopropyloxid, Aluminiumhexafluoracetylacetonat, Aluminiumdichlorohydrol, Aluminiumethoxiden,Tris[2,2,6,6-tetramethyl-3,5-heptandianoto]aluminium-III[Al(TMHD)₃], Trimethylaluminium, Triethylaluminium, Triisobutylaluminium, Aluminiumacetat, Aluminiumnitrat, Aluminiumpropoxid, Magnesiumacetylacetonat, Chromacetylacetonat, Eisenacetylacetonat und Lanthanidacetylacetonat besteht.

11. Verfahren, bei dem:
(a) ein kristallines mikroporöses Oxid und ein Promotorvorläufer, welcher ein zur Bildung einer Promotor-Metallverbindung befähigtes Promotor-Metall enthält, in Kontakt gebracht werden, wobei das kristalline mikroporöse Oxid einen nicht-gitterartigen Anteil und eine Elementarzellengröße hat, und
(b) die Mischung von Stufe (a) wärmeaktiviert wird, um die Promotor-Metallverbindung in den nicht-gitterartigen Teil des kristallinen mikroporösen Oxids einzuarbeiten, ohne die Elementarzellengröße des kristallinen mikroporösen Oxids wesentlich zu steigern.

12. Verfahren nach Anspruch 11, bei dem außerdem das Produkt von Stufe (b) in ein Matrixmaterial eingearbeitet wird.

13. Verfahren nach Anspruch 11, bei dem das kristalline mikroporöse Oxid aus der Gruppe bestehend aus Zeolithen, Tectosilikaten, tetraedrischen Alumophosphaten und tetraedrischen Silicoalumophosphaten ausgewählt ist.

14. Verfahren nach Anspruch 11, bei dem das kristalline mikroporöse Oxid ein Zeolith ist und das Promotor-Metall Aluminium ist.

15. Verfahren nach Anspruch 11, bei dem das Promotor-Metall aus der Gruppe bestehend aus Magnesium, Chrom, Eisen, Lanthan und Aluminium ausgewählt ist.

16. Verfahren nach Anspruch 11, bei dem der Promotorvorläufer aus der Gruppe bestehend aus Aluminiumacetylacetonat, Aluminiumisopropyloxid, Aluminiumhexafluoracetylacetonat, Aluminiumdichlorohydrol, Aluminiumethoxiden, Tris[2,2,6,6-tetramethyl-3,5-heptandianoto]aluminium-III[Al(TMHD)₃], Trimethylaluminium, Triethylaluminium, Triisobutylaluminium, Aluminiumacetat, Aluminiumnitrat, Aluminiumpropoxid, Magnesiumacetylacetonat,Chromacetylacetonat, Eisenacetylacetonat und Lanthanidacetylacetonat ausgewählt ist.

17. Verfahren nach Anspruch 15, bei dem der Promotorvorläufer Aluminiumacetylacetonat ist.

18. Katalytisches Fließbett-Crack-Verfahren, bei dem
ein Einsatzmaterial bei katalytischen Fließbett-Crack-Bedingungen mit einem Katalysator in Kontakt gebracht wird, welcher
(i) ein Matrixmaterial,
(ii) ein in das Matrixmaterial eingearbeitetes kristallines mikroporöses Oxid enthält,
wobei das kristalline mikroporöse Oxid einen nicht-gitterartigen Anteil und eine Elementarzellengröße hat, der nicht-gitterartige Anteil eine darin eingearbeitete Promotor-Metallverbindung enthält, die in der Lage ist, die Lewis-Acidität zu steigern, ohne die Elementarzellengröße des kristallinen mikroporösen Oxids anzuheben, welches in einem der vorangehenden Ansprüche 1 bis 10 beansprucht oder mittels eines Verfahrens gemäß einem der Ansprüche 11 bis 17 hergestellt worden ist.

## Revendications

1. Catalyseur comprenant :
(i) un matériau formant matrice; et
(ii) un oxyde microporeux cristallin incorporé audit matériau formant matrice,
ledit oxyde microporeux cristallin comprenant une partie autre que l'ossature et ayant une taille de cellule unitaire, ladite partie autre que l'ossature comprenant un composé métallique promoteur capable d'augmenter l'acidité de Lewis qui y est incorporée sans augmenter sensiblement la taille de cellule unitaire de l'oxyde microporeux cristallin.

2. Catalyseur selon la revendication 1, dans lequel le composé métallique promoteur est un composé d'aluminium.

3. Catalyseur selon la revendication 1 ou 2, dans lequel l'oxyde microporeux cristallin est une zéolite.

4. Catalyseur selon l'une quelconque des revendications précédentes. dans lequel l'oxyde microporeux cristallin est une zéolite X ou Y.

5. Catalyseur selon la revendication 4, dans lequel l'oxyde microporeux cristallin est une zéolite Y ayant une taille de cellule unitaire égale ou supérieure à 24,30 angströms.

6. Catalyseur selon la revendication 4, dans lequel l'oxyde microporeux cristallin est une zéolite Y ayant une taille de cellule unitaire égale ou supérieure à 24,40 angströms.

7. Catalyseur selon l'une quelconque des revendications précédentes 1 à 3, dans lequel ledit oxyde microporeux cristallin est choisi dans le groupe constitué des zéolites, des tectosilicates, des aluminophosphates tétraédriques et des silicoaluminophosphates tétraédriques.

8. Catalyseur selon l'une quelconque des revendications précédentes. dans lequel ledit oxyde microporeux cristallin est une zéolite et dans lequel ledit composé métallique promoteur est l'oxyde d'aluminium.

9. Catalyseur selon l'une quelconque des revendications précédentes 1 à 7. dans lequel ledit composé métallique promoteur est un oxyde de métal dans lequel le métal dudit oxyde de métal est choisi dans le groupe constitué du magnésium, du chrome, du fer, du lanthane et de l'aluminium.

10. Catalyseur selon l'une quelconque des revendications précédentes, dans lequel ledit composé métallique promoteur est un précurseur de promoteur décomposé par la chaleur choisi dans le groupe constitué de l'acétylacétonate d'aluminium, de l'isopropyloxyde d'aluminium, de l'hexafluoroacétylacétonate d'aluminium, du dichlorhydrol d'aluminium, des éthoxydes d'aluminium, du tris[2,2,6,6-tétraméthyl-3,5-heptanedianoto]-aluminium-III[Al(TMHD)₃], du triméthylaluminium, du triéthylaluminium, du triisobutylaluminium, de l'acétate d'aluminium, du nitrate d aluminium, du propoxyde d'aluminium, de l'acétylacétonate de magnésium, de l'acétylacétonate de chrome, de l'acétylacétonate de fer et de l'acétylacétonate de lanthanide.

11. Procédé comprenant les étapes consistant :
(a) à mettre en contact un oxyde microporeux cristallin et un précurseur de promoteur comprenant un métal promoteur capable de former un composé métallique promoteur, ledit oxyde microporeux cristallin comprenant une partie autre que l'ossature et ayant une taille de cellule unitaire; et
(b) à activer à la chaleur le mélange de l'étape (a) pour incorporer le composé métallique promoteur à la partie autre que l'ossature de l'oxyde microporeux cristallin sans augmenter sensiblement la taille de cellule unitaire de l'oxyde microporeux cristallin.

12. Procédé selon la revendication 11, comprenant par ailleurs l'incorporation du produit de l'étape (b) à un matériau formant matrice.

13. Procédé selon la revendication 11, dans lequel ledit oxyde microporeux cristallin est choisi dans le groupe constitué des zéolites, des tectosilicates, des aluminophosphates tétraédriques et des silicoaluminophosphates tétraédriques.

14. Procédé selon la revendication 11, dans lequel ledit oxyde microporeux cristallin est une zéolite et dans lequel ledit métal promoteur est l'aluminium.

15. Procédé selon la revendication 11, dans lequel ledit métal promoteur est choisi dans le groupe constitué du magnésium. du chrome, du fer, du lanthane et de l'aluminium.

16. Procédé selon la revendication 11, dans lequel ledit précurseur de promoteur est choisi dans le groupe constitué de l'acétylacétonate d'aluminium. de l'isopropyloxyde d'aluminium, de l'hexafluoroacétylacétonate d'aluminium, du dichlorhydrol d'aluminium, des éthoxydes d'aluminium, du tris[2,2,6,6-tétraméthyl-3,5-heptanedianoto]aluminium-III[Al(TMHD)₃], du triméthylaluminium, du triéthylaluminium, du triisobutylaluminium, de l'acétate d'aluminium, du nitrate d'aluminium, du propoxyde d'aluminium, de l'acétylacétonate de magnésium, de l'acétylacétonate de chrome, de l'acétylacétonate de fer et de l'acétylacétonate de lanthanide.

17. Procédé selon la revendication 15, dans lequel ledit précurseur de promoteur est l'acétylacétonate d'aluminium.

18. Procédé de craquage catalytique en lit fluidisé comprenant les étapes consistant à mettre en contact une charge d'alimentation, dans des conditions de craquage catalytique en lit fluidisé, avec un catalyseur comprenant :
(i) un matériau formant matrice; et
(ii) un oxyde microporeux cristallin incorporé audit matériau formant . matrice.
ledit oxyde microporeux cristallin comprenant une partie autre que l'ossature et ayant une taille de cellule unitaire, ladite partie autre que l'ossature comprenant un composé métallique promoteur capable d'augmenter l'acidité de Lewis qui y est incorporée sans augmenter sensiblement la taille de cellule unitaire de l'oxyde microporeux cristallin selon l'une quelconque des revendications précédentes 1-10 ou préparé par un procédé selon l'une quelconque des revendications précédentes 11-17.
